# EUROPÄISCHE PATENTSCHRIFT

(11) **EP 4 291 861 B1**
(45) Veröffentlichungstag und Bekanntmachung des Hinweises auf die Patenterteilung: **05.11.2025**
(21) Anmeldenummer: 22703376.8
(22) Anmeldetag: 02.02.2022
(51) Int. Cl.: G01D 21/00

(54) **VERFAHREN ZUM ERKENNEN EINER MANIPULATION EINER SENSOREINHEIT**
METHOD FOR DETECTING MANIPULATION OF A SENSOR UNIT
PROCÉDÉ DE DÉTECTION D'UNE MANIPULATION D'UNE UNITÉ DE DÉTECTION

(30) Priorität: 12.02.2021 DE 102021201325
(43) Veröffentlichungstag der Anmeldung: 20.12.2023
(73) Patentinhaber: Schaeffler Technologies AG & Co. KG, 91074 Herzogenaurach (DE)
(72) Erfinder: REUTHER, Achim, 80687 München (DE); SCHIFFERL, Ludwig, 80687 München (DE)
(74) Vertreter: Vitesco Technologies
(86) Internationale Anmeldenummer: PCT/EP2022/052491
(87) Internationale Veröffentlichungsnummer: WO 2022/171504

(56) Entgegenhaltungen:
- EP-A1- 3 222 833
- DE-A1- 102010 042 748
- KR-B1- 101 592 776
- US-A1- 2006 218 895
- US-B1- 10 127 409
- US-B1- 6 366 208

## Beschreibung

Die vorliegende Erfindung betrifft ein Verfahren zum Erkennen einer Manipulation eines Abgassensors, vorzugsweise eines Abgassensors für einen Verbrennungsmotor eines Fahrzeugs.

Sensoreinheiten bestehen üblicherweise aus einer Messeinheit, die dazu ausgebildet ist, eine physikalische Eigenschaft zu messen und ein die physikalische Eigenschaft anzeigendes elektrisches Messsignal zu erzeugen, wie beispielsweise ein Stromsignal, Spannungssignal oder Widerstandssignal, und einer mit der Messeinheit verbundene Steuerungseinheit, die dazu ausgebildet ist, die von der Messeinheit erzeugten Messsignale zu empfangen und zu verarbeiten und an die Messeinheit Steuerungssignale zu senden. Die Sensoreinheit wiederum kann mit einer Steuerungsvorrichtung verbunden sein, die die von der Sensoreinheit aufbereitenden Sensorsignale weiterverarbeitet.

Vermehrt treten jedoch Sensormanipulationen auf, bei denen beispielsweise die originale Messeinheit mit einer anderen Messeinheit ausgetauscht wird, die unter Umständen nicht die Messgenauigkeit aufweist wie die originale Messeinheit. Auch das Ersetzen der originalen Messeinheit mit einem elektrischen Bauteil tritt vermehrt auf, welches jedoch lediglich zufriedenstellende Messignale liefert, die aber nicht die zu messende physikalische Eigenschaft anzeigt. Solche Manipulationen gilt es zu erkennen, da mit diesen auch das Messsignal manipuliert und verfälscht ist.

Die EP 3 581 894 A1 offenbart ein Verfahren, eine Vorrichtung und ein System zur Erfassung eines Manipulationsversuches an einem Sensor eines Fahrzeuges. Dabei wird ein erstes Messsignal eingelesen, das repräsentativ für einen mit dem Sensor erfassten Messwert der ersten Messgröße ist. Ferner wird ermittelt, ob das erste Messsignal außerhalb eines vorgegebenen Nutzbereichs liegt. Wird dabei ermittelt, dass das erste Messsignal außerhalb eines vorgegebenen Nutzbereichs liegt, so wird ein Ausgangssignal ausgegeben, das repräsentativ für einen Manipulationsversuch ist.

Die JP 2011-024354 A beschreibt ein Steuerungsverfahren für einen Motor-Generator. Insbesondere soll dabei erkannt werden, ob ein Drehzahlsensor mit der ECU verbunden ist oder nicht. Dabei wird eine Verbindungsunterbrechung erkannt, wenn ein Erfassungssignal des Drehzahlsensors nicht mehr empfangen werden kann. Zudem ist darin offenbart, dass eine Verbindungsunterbrechung erkannt wird, wenn die ECU ein Pulssignal vom Drehzahlsensor empfängt, das kein kontinuierliches Signal zu vorbestimmten Intervallen ist.

Aus der US 2014/0028463 A1 ist ein System und Verfahren zum Erkennen eines Sensoraustauschs bekannt. Dabei kann die Abwesenheit oder Verbindungsunterbrechung eines Stromsensors von einer Steuerung durch die Rohdaten der angelegten Eingangsspannung ermittelt werden, die aufgrund des Fehlers zufällig oder irregulär sein kann.

Die CN 111 044 684 A zeigt ein System zur Alterungserkennung eines NOx-Sensors. Dabei wird das Signal des NOx-Sensors während vorbestimmter Betriebsbedingungen mit einem Referenzsignal verglichen und bei Abweichen auf eine Alterung geschlossen.

Weiteren Stand der Technik bilden US 10 127 409 B1, DE 10 2010 042 748 A2, US 6 366 208 B1, KR 101 592 776 B1, US 2006 / 0 218 895 A1 und EP 3 222 833 A1.

Es ist eine Aufgabe der vorliegenden Erfindung, eine Manipulation, wie beispielsweise ein Austausch der originalen Messeinheit, eines Abgassensors zuverlässig zu erkennen und eine entsprechende Warnung auszugeben.

Diese Aufgabe wird mit einem Verfahren gemäß unabhängigem Anspruch 1 gelöst. Vorteilhafte Ausgestaltungen sind in den Unteransprüchen angegeben.

Der vorliegenden Erfindung liegt im Wesentlichen der Gedanke zugrunde, eine Manipulation eines Abgassensors, insbesondere einer Messeinheit des Abgassensors, dadurch zu überprüfen, dass eine Steuerungseinheit des Abgassensors einen physikalischen Fingerprint der Messeinheit speichert und diesen regelmäßig oder bei Bedarf abfragt, wie beispielsweise bei jedem Neustart des Abgassensors. Beispielsweise kann die Steuerungseinheit hierfür von der Messeinheit ein Diagnosesignal abfragen, beispielsweise in Form durch Senden eines vorbestimmten Diagnosesignals und dem Empfangen eines erwarteten Antwortsignals durch die Messeinheit. Entspricht das in Erwiderung auf das Diagnosesignal erzeugte Antwortsignal nicht den Erwartungen, kann von einer Manipulation der Messeinheit ausgegangen werden, beispielweise ein unerlaubter Austausch der Messeinheit.

Folglich ist gemäß einem Aspekt der vorliegenden Erfindung ein Verfahren zum Erkennen einer Manipulation eines Abgassensors, der zum Erfassen der Stickoxid- und/oder Ammoniak-Konzentration in einem Abgastrakt eines Verbrennungsmotors eines Fahrzeugs ausgebildet ist, offenbart, der eine Messeinheit, die ein keramikbasiertes Sensorelement, wie beispielsweise ein yttriumstabilisiertes Zirkonoxid, umfasst und dazu ausgebildet ist, eine physikalische Eigenschaft zu messen, und eine mit der Messeinheit verbundene Steuerungseinheit aufweist, die dazu ausgebildet ist, von der Messeinheit Messsignale zu empfangen und an die Messeinheit Steuerungssignale zu senden. Das erfindungsgemäße Verfahren umfasst ein Senden von zumindest einem vorbestimmten Diagnosesignal an die Messeinheit mittels der Steuerungseinheit, ein Empfangen eines von der Messeinheit in Erwiderung auf das vorbestimmte Diagnosesignal erzeugten Antwortsignals an der Steuerungseinheit und ein Erkennen einer Manipulation des Abgassensors, wenn das von der Steuerungseinheit empfangene Antwortsignal von einem vorbestimmten Referenzsignal um mehr als einen vorbestimmten Schwellenwert abweicht.

Bei dem Abgleich des empfangenen Antwortsignals mit dem vorbestimmten Referenzsignal werden zwei Signalverläufe über die Zeit betrachtet, wobei eine Abweichung um mehr als den vorbestimmten Schwellenwert vorliegt, wenn zumindest ein zeitlich diskreter Wert oder eine aus dem zeitlichen Verlauf abgeleitete Größe des Antwortsignals von dem aus dem zeitlichen Verlauf des Referenzsignals erwartbaren vorbestimmten Schwellenwert abweicht.

Dabei macht sich die vorliegende Erfindung zunutze, dass eine Manipulation des Abgassensors, insbesondere der Messeinheit, dadurch festgestellt werden kann, dass das empfangene Antwortsignal, welches in Erwiderung auf das Senden des vorbestimmten Diagnosesignals erzeugt wird, nicht einem vorbestimmten erwarteten Referenzsignal entspricht oder davon um mehr als den Schwellenwert abweicht. Ist dem der Fall, kann eine Manipulation des Abgassensors zuverlässig erkannt werden.

Bevorzugt wird das Verfahren bei jeder Inbetriebnahme des Abgassensors durchgeführt. Somit kann vor der tatsächlichen Messung überprüft werden, ob in der Zwischenzeit, das heißt seit der letzten Inbetriebnahme, eine Manipulation des Abgassensors stattgefunden hat oder nicht.

In einer besonders bevorzugten Ausgestaltung des erfindungsgemäßen Verfahrens handelt es sich bei dem vorbestimmten Diagnosesignal um einen oder mehrere diracartige Stromimpulse oder eine Impedanzmessung von Elektroden der Messeinheit. Folglich ist es bevorzugt, dass das vorbestimmte Diagnosesignal eine zeitlich möglichst kurze Anregung mit definierter Bandbreite und Amplitude ist, die das System zu einem Antwortsignal mit Frequenz und Amplitude erzwingt. Dieses Antwortsignal wird dann von der Steuerungseinheit mit einem vorbestimmten Referenzsignal verglichen. Ein besonderer Vorteil des diracartigen Diagnosesignals ist der hohe Informationsgehalt des Antwortsignals aufgrund der breitbandigen Anregung.

In einer vorteilhaften Ausgestaltung des erfindungsgemäßen Verfahrens ist der Abgassensor dazu ausgebildet, in einem Flugzeug, einem Ladfahrzeug, einem Schienenfahrzeug, einem Wasserfahrzeug oder einem Gebäude eingesetzt zu werden.

In einer bevorzugten Ausgestaltung bildet ein yttriumstabilisiertes Zirkonoxid samt der daran angebrachten Elektronik die Messeinheit des Abgassensors im Sinne der vorliegenden Erfindung. Die Sensor-Steuerungseinheit (= sensor control unit SCU), die mit der Messeinheit elektrisch verbunden ist, bildet die Steuerungseinheit des Abgassensors im Sinne der vorliegenden Erfindung.

Vorzugsweise umfasst das erfindungsgemäße Verfahren ferner ein Ausgeben einer Warnung, die eine Manipulation des Abgassensors anzeigt, wenn eine Manipulation des Abgassensors erkannt wurde.

Weitere Aufgaben und Merkmale der vorliegenden Erfindung werden dem Fachmann durch Ausüben der vorliegenden Lehre und Betrachten der beiliegenden Zeichnungen ersichtlich, in denen:
- Fig. 1: schematische Ansicht einesAbgassensors, und
- Fig. 2: ein beispielhaftes Ablaufdiagramm eines erfindungsgemäßen Verfahrens zum Erkennen einer Manipulation des Abgassensors der Fig. 1.

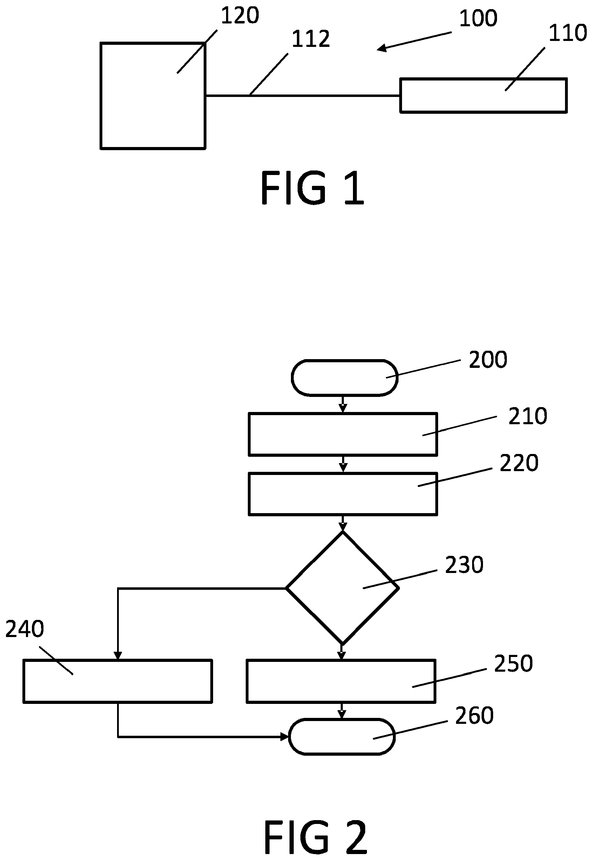

Die Fig. 1 zeigt eine schematische Ansicht eines Abgassensors 100. Der Abgassensor 100 der Fig. 1 besteht aus einer Messeinheit 110, die mittels einer elektrischen Verbindungsleitung 112 mit einer Steuerungseinheit 120 verbunden ist. Mittels der elektrischen Verbindungsleitung 112 kann die Steuerungseinheit 110 Steuerungssignale an die Messeinheit 110 senden und die Messeinheit 110 wiederum kann die elektrische Verbindungsleitung 112 Messsignale an die Steuerungseinheit 110 zur weiteren Verarbeitung übermitteln.

Die Fig. 2 zeigt ein beispielhaftes Ablaufdiagramm eines erfindungsgemäßen Verfahrens zum Erkennen einer Manipulation des Abgassensors 100 der Fig. 1. Insbesondere kann mittels des erfindungsgemäßen Verfahrens ein Austausch der Messeinheit 110 des Abgassensors 100 der Fig. 1 mit einer anderen Messeinheit festgestellt werden.

Das Verfahren der Fig. 2 startet beim Schritt 200 und gelangt dann zum Schritt 210, bei dem die Steuerungseinheit 120 zumindest ein vorbestimmtes Diagnosesignal an die Messeinheit 110 mittels der Verbindungsleitung 112 sendet. In einem darauffolgenden Schritt 220 erzeugt die Messeinheit 110 in Erwiderung auf das vorbestimmte Diagnosesignal ein Antwortsignal und übermittelt dies an die Steuerungseinheit 120, die dieses Antwortsignal empfängt.

In einem darauffolgenden Schritt 230 wird überprüft, ob das empfangene Antwortsignal von einem vorbestimmten Referenzsignal um mehr als einen Schwellenwert abweicht. Wird beim Schritt 230 ermittelt, dass das empfangene Antwortsignal von dem vorbestimmten Referenzsignal um mehr als den Schwellenwert abweicht, gelangt das Verfahren zum Schritt 240, an dem eine Manipulation des Abgassensors 100 erkannt wird, bevor das Verfahren beim Schritt 260 endet.

Wird jedoch beim Schritt 230 ermittelt, dass das empfangene Antwortsignal von dem vorbestimmten Referenzsignal um nicht mehr als den Schwellenwert abweicht, gelangt das Verfahren zum Schritt 250, an dem ein ordnungsgemäßer Abgassensor 100 diagnostiziert wird, bevor das Verfahren wiederum beim Schritt 260 endet.

Bei dem von der Steuerungseinheit 120 gesendeten vorbestimmten Diagnosesignal kann es sich vorzugsweise um einen oder mehrere diracartige Stromimpulse handeln, die, bei ordnungsgemäßer Messeinheit 110, zu einem bekannten und erwarteten Antwortsignal führen, welche einem vorbestimmten Referenzsignal entsprechen sollten. Somit kann mit dem Abgleich des empfangenen Antwortsignals mit dem erwarteten Antwort- bzw. Referenzsignal eine Manipulation erkannt werden. Der Schwellenwert kann ein Messwert oder ein Signalverlauf sein.

## Patentansprüche

1. Verfahren zum Erkennen einer Manipulation eines Abgassensors (100), der zum Erfassen der Stickoxid- und/oder Ammoniakkonzentration in einem Abgastrakt eines Verbrennungsmotors eines Fahrzeugs ausgebildet ist, wobei der Abgassensor (100) eine Messeinheit (110), die ein keramikbasiertes Sensorelement umfasst und dazu ausgebildet ist, eine physikalische Eigenschaft zu messen, und eine mit der Messeinheit (110) verbundene Steuerungseinheit (120) aufweist, die dazu ausgebildet ist, von der Messeinheit (110) Messsignale zu empfangen und an die Messeinheit (110) Steuerungssignale zu senden, wobei das Verfahren aufweist:
- Senden von zumindest einem vorbestimmten Diagnosesignal an die Messeinheit (110) mittels der Steuerungseinheit (120),
- Empfangen eines von der Messeinheit (110) in Erwiderung auf das vorbestimmte Diagnosesignal erzeugten Antwortsignals an der Steuerungseinheit (120), und
- Erkennen einer Manipulation des Abgassensors (100), wenn das empfangene Antwortsignal von einem vorbestimmten Referenzsignal um mehr als einen Schwellenwert abweicht.

2. Verfahren nach Anspruch 1, wobei das Verfahren bei jeder Inbetriebnahme des Abgassensors (100) durchgeführt wird.

3. Verfahren nach einem der vorhergehenden Ansprüche, wobei das vorbestimmte Diagnosesignal ein oder mehrere diracartige Stromimpulse oder eine Impedanzmessung von Elektroden der Messeinheit (110) ist.

4. Verfahren nach einem der vorhergehenden Ansprüche, wobei der Abgassensor (100) dazu ausgebildet ist, in einem Flugzeug, einem Landfahrzeug, einem Schienenfahrzeug, einem Wasserfahrzeug oder einem Gebäude eingesetzt zu werden.

5. Verfahren nach einem der vorhergehenden Ansprüche, ferner mit:
- Ausgeben einer Warnung, die eine Manipulation des Abgassensors (100) anzeigt, wenn eine Manipulation des Abgassensors (100) erkannt wurde.

## Claims

1. Method for detecting manipulation of an exhaust gas sensor (100) designed to detect the nitrogen oxide and/or ammonia concentration in an exhaust system of an internal combustion engine of a vehicle, the exhaust gas sensor (100) having a measuring unit (110), which comprises a ceramic-based sensor element and is designed to measure a physical property, and a control unit (120), connected to the measuring unit (110), which is designed to receive measurement signals from the measuring unit (110) and to send control signals to the measuring unit (110), the method comprising:
- sending at least one predetermined diagnostic signal to the measuring unit (110) by means of the control unit (120),
- receiving at the control unit (120) a response signal generated by the measuring unit (110) in response to the predetermined diagnostic signal, and
- detecting manipulation of the exhaust gas sensor (100) if the received response signal deviates from a predetermined reference signal by more than a threshold value.

2. Method according to Claim 1, the method being carried out each time the exhaust gas sensor (100) is started up.

3. Method according to either of the preceding claims, the predetermined diagnostic signal being one or more Dirac-type current pulses or an impedance measurement of electrodes of the measuring unit (110).

4. Method according to one of the preceding claims, the exhaust gas sensor (100) being designed to be used in an aircraft, a land vehicle, a rail vehicle, a watercraft or a building.

5. Method according to one of the preceding claims, further comprising:
- issuing a warning indicating manipulation of the exhaust gas sensor (100) when manipulation of the exhaust gas sensor (100) has been detected.

## Revendications

1. Procédé d'identification d'une manipulation d'un capteur de gaz d'échappement (100), qui est réalisé pour détecter la concentration d'oxyde d'azote et/ou d'ammoniac dans un conduit de gaz d'échappement d'un moteur à combustion interne d'un véhicule, le capteur de gaz d'échappement (100) comportant une unité de mesure (110), qui comprend un élément de capteur à base de céramique et est réalisée pour mesurer une propriété physique, et une unité de commande (120) reliée à l'unité de mesure (110), qui est réalisée pour recevoir des signaux de mesure de l'unité de mesure (110) et envoyer des signaux de commande à l'unité de mesure (110), le procédé présentant :
- envoi d'au moins un signal de diagnostic prédéfini à l'unité de mesure (110) au moyen de l'unité de commande (120),
- réception sur l'unité de commande (120) d'un signal de réponse généré par l'unité de mesure (110) en réponse au signal de diagnostic prédéfini, et
- identification d'une manipulation du capteur de gaz d'échappement (100) lorsque le signal de réponse reçu s'écarte d'un signal de référence prédéfini de plus d'une valeur de seuil.

2. Procédé selon la revendication 1, le procédé étant effectué à chaque mise en service du capteur de gaz d'échappement (100).

3. Procédé selon l'une des revendications précédentes, le signal de diagnostic prédéfini étant une ou plusieurs impulsions de courant de Dirac ou une mesure d'impédance d'électrodes de l'unité de mesure (110).

4. Procédé selon l'une des revendications précédentes, le capteur de gaz d'échappement (100) étant réalisé pour être utilisé dans un avion, un véhicule terrestre, un véhicule sur rails, une embarcation ou un bâtiment.

5. Procédé selon l'une des revendications précédentes, avec en outre :
- émission d'une alerte, qui indique une manipulation du capteur de gaz d'échappement (100) lorsqu'une manipulation du capteur de gaz d'échappement (100) a été identifiée.
